# EUROPEAN PATENT APPLICATION

(11) **EP 4 701 214 A1**
(43) Date of publication of application: **25.02.2026**
(21) Application number: 24195757.0
(22) Date of filing: 21.08.2024
(51) Int. Cl.: H04N 23/667, H04N 23/80

(54) **METHOD AND SYSTEM FOR RECORDING RAW CINEMA**

(71) Applicant: SWISS RIG FlexCo, 1070 Vienna (AT)
(72) Inventor: Cortlan, McManus, 1070 Vienna (AT); Davies, Geraint, 1070 Vienna (AT)
(74) Representative: Vesterinen, Jussi Tapio

(57) **Abstract**

The present invention relates a method of recording raw cinema on a camera apparatus (1) comprising a camera engine comprising a video data output engine (11) and a photo capture engine (12). The method comprises the steps of: setting a recording frame rate for the camera engine; the video data output engine (11) generating a frame rate signal based on the set recording frame rate; and the photo capture engine (12) recording (40) raw image frames at cinematic frame intervals defined by the frame rate signal.

## Description

### TECHNICAL FIELD

The present invention relates to a method of recording raw cinema on a camera apparatus, such as a handheld device, which may be a mobile phone. The present invention also relates to a camera apparatus configured to carry out the proposed method.

### BACKGROUND OF THE INVENTION

For the past twenty years, two concurrent hardware developments have transformed the art of cinema production. First, initially for larger budget productions, raw cinema has replaced film and earlier digital cinematography cameras as the primary production tool used in Hollywood and other types of high-end productions. Second, the rise of "everyday cameras" that are included in mobile phones, and now found in everyone's pocket, have gotten better and better with each passing year, so that now many are capable of capturing high quality photographs as well as video.

Although filmmaking purists still regard a "film camera" that shoots on filmstock, as the best, if not the only way, to make a "film" in the past ten to twenty years, it is now quite rare to make a "film" with film. This is related to decreases in training centers, film camera access, available film stocks and motion picture labs as well as budgets and delivery timeframes. Many traditional training centers (i.e. university courses in filmmaking, non-profit media training centers), no longer teach film production courses using actual film cameras so that today, it is difficult to even learn how to shoot with film cameras or, especially for up-and-coming directors and producers, to recruit or hire crews that have filmmaking experience. On top of the lack of training, and although used and rental cameras can be available, access to new film camera does not exist at all today, as the last new film camera was introduced more than 15 years ago by a company that is no longer in business. Perhaps the biggest change in film production, is the decrease of points of sale for film stock but more importantly, the significant decrease in motion picture labs. For example, today, there remain around 70 in the world, with only 16 of them being able to process 35 mm and 16 mm film stocks in color and black-and-white. Whereas in the past, someone could easily acquire, borrow or rent a Super 8 film camera and then graduate to be an owner/operator of a S16mm and be a director of photography using 35 mm film cameras, this typical progression no longer exists. Today film cameras are used by very dedicated film directors who either have large budgets or by the cineaste who insists on using only film for a particular production. More typically, people migrated to video production technologies if filmmaking was out of reach.

While video cameras had existed beforehand the 1970's and 1980's, this era marked the first time that a portable video camera with a built-in video recorder became widely accessible. The cost of production - videotape - is certainly much lower than filmstock and processing and printing films. Therefore, for many, video was a viable option to tell motion picture stories. And yet, aesthetically, video was never considered to be truly "cinematic." Of course silver halide film does have its inherent "grain" characteristic which is missing in video's corresponding "noise" characteristic. In addition, film allowed for more unique chemical development techniques as well as "timing" printing techniques to get a unique "look," only until the last few years, as video allowed for anything remotely similar with lookup tables that can better alter the look of video. Although the "look" or gamma/color space topic will be revisited later, even more pressing between video and film is how a frame was recorded and how many frames per second were recorded.

In 2000, the first digital video camera that could record 24 frames per second (fps) like a film motion picture camera was introduced, namely the Sony HDW-F900. Equally important, it could also record each frame as "progressive" (i.e. 1 image per frame) instead of interlaced (i.e. combination of two images, one for upper ½ and another for lower ½ of frame). This brought in the "24p" revolution. Shortly thereafter, a consumer version by Panasonic was released, namely the DVX-100, which was a digital video camera which shot 24p in standard definition resolutions instead of high-definition (HD), and for independent filmmakers, the DVX-100 was a tool that unleashed new ways of telling cinematic stories using, comparatively speaking, low cost tools.

Several years later, the DSLR, and later mirrorless, revolution would follow these video developments. Based on photography cameras, these large sensor cameras that could use removable lenses, had a video mode that allowed filmmakers to create videos with shallow depth of field, or "bokeh." Recorded as heavily processed and compressed video formats, these cameras offered a new look although initially these cameras could not shoot in HD or 4k using cinematic frame rates, they allowed for a unique look that compared to large sensor cameras that cost significantly more.

Around this same time, the first raw cinema cameras began to be announced. Following on still photography cameras' ability to shoot raw images as well as Adobe's open standard "DNG" format for stills, which would later offer numbered image sequences similar to frames on filmstock called CinemaDNG, the first raw cinema cameras were introduced in the early 2000's first by Dalsa, and then by Arri, the largest film motion picture camera manufacturer, followed by many other camera makers. Similar to how raw photography offered something completely unique, raw cinema was unlike anything that had come before it. It wasn't film, nor was it digital video. Because it was completely unprocessed, it offered the creative options of film, especially in post-production, to make the footage look unique to each story. Because digital sensors have noise, an editor could manipulate the look of the noise and add film grain characteristic in a way that is not possible with video. Because the files are unprocessed - no image characteristics are permanently "burnt" into the image frame - sharpening, noise, ISO, white balance, tint and colors can be completely changed as well, again, unique to raw. These raw cinema cameras took the best of the digital workflow from production to post-production with the creative potential of film to create something completely unique that has transformed not only Hollywood and large productions, but even lower budget productions, with the advent of newer, lower cost raw cinema cameras that could start around €2000-€3000 for a basic "kit" including entry level raw cinema camera, entry level lens, a removeable memory card with low capacity, and a single rechargeable battery.

All of these raw cinema cameras had unique electronics, integrated circuits and processors that were bespoke to each manufacturer. These hardware components were required, and it would have been impossible for the cameras to shoot raw cinema without the specific application-specific integrated circuits (ASICs), field-programmable gate arrays (FPGAs), custom hardware read-only memories (ROMs), etc. to record in raw cinema.

Around the same year as the first raw cinema cameras, in 2007, the first iPhone was announced. Although it did not include native video recording, over the next 15 years, iPhones (and similar Android specification phones), would become respectable still photography and video cameras. On the still photography front, raw photography was introduced while on the video front, 24p was introduced as was higher quality compression "codecs" and Log color spaces. For example, today, Apple includes special processors to compress to Apple's high-end codec, ProRes.

The quality of mobile phone cameras recently is unmistaken. In fact, according to some research, iPhone is the world's top used camera, and its camera, is used for millions of hours of video recordings uploaded to social and online video platforms, as well as for journalism, documentaries and even feature films.

Thus, in the last fifteen years, concurrently, there have been two revolutions when it comes to production of motion picture: on the one hand, an embrace of raw cinema cameras based on bespoke designed hardware platforms; and on the other hand, an embrace of using cameras as found in mobile phones. What has never happened, is a novel software method that allows for a software raw cinema camera to be developed that uses standard mobile phone hardware without the requirement for bespoke hardware processors.

### SUMMARY OF THE INVENTION

There have been two main reasons that until now raw cinema production has not been possible using a mobile phone. The first problem to solve is to generate consistent cinematic frame rates using a photo capture output, something the manufacturers have not designed it to do. The second problem to solve is how to encode upwards of tens of 1000's of potential raw frames, each several megabytes (MB) in size into a usable format that can either be saved to disk and/or transmitted to one or more periphery devices of a network of computing devices, in real-time. To put this into context, at 24 fps, 1 second of cinema, equals 24 frames; 1 minute equals 1440 frames; 10 minutes equals 14,400 frames, and so on while each frame can be upwards of many MBs in size so that for example, at 1080 resolutions, with lossless compression, one frame can be approximately 2.5 MB in size, so in any given minute, 1440 individual frames, equaling approximately 3.6 GB at 1080 resolution, need to be captured from the raw sensor, encoded in a raw format, while meta-data is recorded, and sync audio and an optional proxy video file are generated. To create a method that works well while at the same time does not cause significant overheating of the device is essential for its successful implementation.

First aim: Obtain a dual-capture engine in which a video data capture is used to obtain a cinematic frame rate signal, and in which a raw image sensor capture is used for photo capture at intervals defined by the cinematic frame rate signal.

Whereas photo capture outputs on a mobile phone can capture raw images, mobile phone video cameras cannot take raw images; video cameras can only take processed video. Thus, in order for a mobile phone to be capable of raw cinema production, the photo capture is required to be used as the output because the video capture output of mobile phones already has processing that happens and cannot be overridden by a third-party developer. That is, manufacturers' camera application programming interfaces (APIs) allow developers to access the raw sensor in photo capture mode, but in video capture mode, only allow access well after the image has already been processed, much further down the pipe than what is possible via photo capture. Having said that, the photo capture output cannot accurately record cinematic frame rates, for example at 24 fps, meaning that an individual frame would need to be taken every 41 ms. Mobile phone software APIs that allow third-party developers to access the included hardware, for example, do permit requests to be made, for example, "take one picture every 41 ms using photo capture output," but in actuality, there is wide variance in consistency. For example, one image may be taken at 35 ms while the next one might be taken at 55 ms. So raw images can be captured using photo capture output, and code can be written that nominally could call a frame capture every 41 ms for a frame rate of 24/second, but the captured frames are not cinematic because the 1^{st} second may have 12 frames, the 2^{nd} second might have 21 frames, the 3^{rd} second 24 frames, and so on.

Similar to how a crystal sync film camera works, which is regulated by highly accurate oscillations of quartz crystals to generate consistent cinematic frame rates, we needed to find a way to accurately generate an external frame rate signal that the photo capture output could lock on to that would act as an external clock and could override the photo capture output's inconsistent frame rates. Thus, the proposed method uses two parallel capture session outputs. The first capture output, a video data output, is first set by choosing a cinematic frame rate, for example 24 fps. We do not record any of this data but by setting a cinematic frame rate, this video data output generates a frame rate signal, which is thus an external sync clock and is used in the proposed method to accurately trigger over tens of thousands of frames, to create a "base-line" for the photo capture output to maintain its photo capturing frequency, for example speed of "take one frame every 41 ms", and within a given standard deviation, such as of 1 ms, the frame rate locking signal is created negating the requirement to add a specific hardware clock, that is used in hardware raw cinema cameras. The second capture output, i.e. the photo capture output, is what will actually be used to grab individual raw images from the image sensor that can then be encoded as raw files. This dual capture output, where one is based on video data creating the frame rate signal, and the other one is based on photo capture, creates the raw frame capture engine solving the issue of how to turn a mobile phone camera into one that is capable of producing raw cinema.

Second aim: obtain a raw capture engine with dual-buffer or multi-buffer pools to write and/or transmit raw frames.

As discussed earlier, raw cinema produces approximately 1500 individual frames (i.e. "files") for every minute of footage that can range in storage space of 3.5 GB for 1080 resolution with lossless encoding while "Open Gate" can reach upwards of 20 GB/minute ("Open Gate" is the full sensor size, currently measuring 4024 × 3024 pixels on many mobile phones). This is a tremendous amount of throughput both in terms of file creation that will need to be saved in the order of capture so that it can be played back later in a post-production tool, as well as in terms of storage space. And unlike hardware raw cinema cameras, which could use custom made ASIC/FFGA processors designed specifically to encode raw cinema files in bespoke semi-raw codecs, the proposed method is based on either repurposing standard mobile phone processor units or to encode using a custom software encoder, and therefore an even more efficient process is required from the proposed method to limit potential device overheating.

To create the most efficient raw capture engine, in terms of performance yielding no dropped frames, as well as overall device performance (i.e. governed processors, overheating, battery consumption, etc.), it is necessary to have at least two different buffer pools, and for each buffer pool to have multiple buffers. Each buffer will store one frame at any given moment of time. Each frame will have meta-data added to it while the concurrent audio is recorded Audio will be written in sync with each corresponding frame. The respective frame will then be pushed to a second buffer pool. An encoder will then compress it based on compression settings, and it will then be written to the selected file format before being saved to disk and/or transmitted over data out to an external device.

In view of the above, one of the objects of the present invention is to provide a method to record raw cinema on a camera apparatus, such as a handheld device, which may be a mobile phone, by using the existing hardware of the camera apparatus.

According to a first aspect of the invention, there is provided a method of recording raw cinema on a camera apparatus as recited in claim 1.

One of the main advantages of the proposed method that the existing hardware on the camera apparatus may be used. Thus, it not necessary to make changes to the hardware on the camera apparatus to implement the proposed method.

According to a second aspect of the invention, there is provided a non-transitory computer program product comprising instructions for implementing the steps of the method when loaded and run on computing means of a camera apparatus.

According to a third aspect of the invention, there is provided a camera apparatus for recording raw cinema as recited in claim 15.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
- Figure 1 shows a simplified block diagram of an example camera apparatus, which is arranged to carry out the proposed method, illustrating example hardware and software components and processes of the camera apparatus; and
- Figure 2 shows a flow chart of an example method for recording raw cinema according to the present invention.

### DETAILED DESCRIPTION OF EMBODIMENTS OF THE INVENTION

Embodiments of the present invention will now be described in detail with reference to the attached figures. Identical or corresponding functional and structural elements which appear in the different drawings are assigned the same reference numerals.

The disclosure describes, among other factors, approaches for recording raw images with a generated frame rate signal and then being able to encode those with a system of buffer pools designed for low-power mobile phones. A camera raw image (file) contains unprocessed data from an image sensor of either a digital camera, a motion picture film scanner, or other image scanner. At its most basic level, a raw image has no processing, i.e. it is unprocessed. This means that image characteristics are not "baked" or permanently included into the raw image. Thus, raw image characteristics can be adjusted in post-production in a non-destructive manner. Raw image characteristics could include for example: white balance, color balance, exposure, sharpening and much more. The approaches described herein desirably can, in certain embodiments, enable raw images to be captured or recorded at precise cinematic frame rates, the latter being generated from a video data output engine. These raw images or raw image frames can then pass through a system of buffer pools where different transforms occur. For example, in certain embodiments, raw images are pooled in a first buffer pool or first buffer before being pushed to a raw frame writer where meta-data is added to the raw images and synchronized audio is written. A second buffer pool or second buffer follows and pushes raw frames into an encoder stage that offers both an option to generate and save an encoded video with embedded audio file as well as write raw images with meta-data and a separate audio file. After writing raw images, certain embodiments allow for this data to be sent to an external device and/or saved to memory.

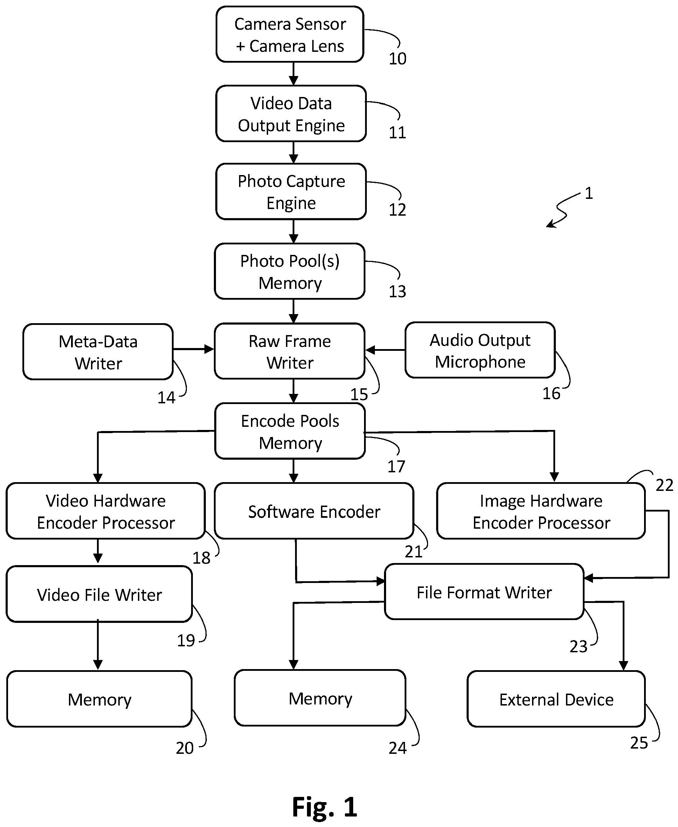

Figure 1 illustrates a camera apparatus **1**, which in this example is a mobile phone, comprising example raw image hardware and software components for carrying out processes required to implement the proposed raw image recording method. Only the elements that are useful for understanding the teachings of the present invention are shown. The elements or some of the elements shown in Figure 1 may be considered to be part of a camera engine or a raw cinema capture system. The Camera Sensor & Camera Lens **10**, which collectively form a camera module or camera arrangement, comprises optical and electronic components found in a mobile phone (or in another camera apparatus) that allow for a raw image to be captured. The Camera Sensor & Camera Lens **10** in some embodiments can be a wide-angle camera lens with a corresponding sensor or it could be an ultra-wide angle camera lens in certain other embodiments. In some embodiments, the Camera Sensor & Camera Lens **10** could be a series of different cameras on a mobile phone, where in certain embodiments it could include an ultra-wide, wide and telephoto angle Camera Sensor & Camera Lens **10.**

Video Data Output Engine **11** is one output of the Camera Sensor & Camera Lens **10.** Video Data Output Engine **11** according to the present invention generates a frame rate signal. This frame rate signal can be at many different frame rates that are typically found in video and motion picture or cinema cameras. In some embodiments, this frame rate signal can be 24 fps whereas in other embodiments it could be 25 fps. In fact, Video Data Output Engine **11** can include any frame rate (18, 24, 25, 30, 50, 60, 75, 120, etc.).

Photo Capture Engine **12** grabs or captures raw images or raw image frames from the Camera Sensor & Camera Lens **10** based on the frame rate signal generated by the Video Data Output Engine **11.** This dual-engine setup has the advantage of being able to capture raw images from the Camera Sensor & Camera Lens **10** by using the Photo Capture Engine **12** while being able to capture those raw images based on the frame rate signal generated by the Video Data Output Engine **11.** For example, if the frame rate defined by the Video Data Output Engine **11** is 24 fps, the Photo Capture Engine **12** captures one raw image every 41 ms whereas in other examples, a raw image may be captured every 16 ms if the frame rate signal is 60 fps or indicates or corresponds to a frame rate of 60 fps. In other words, the frame rate signal may be a periodic signal, and it may have a constant frequency allowing the Photo Capture Engine **12** to capture raw images at a frequency directly or indirectly derivable from the frequency of the frame rate signal. Without the Video Data Output Engine **11** generating a frame rate which is used as the capture clock (signal) of the Photo Capture Engine **12**, the Photo Capture Engine **12** could not capture raw images at consistent time intervals, which may be constant time intervals.

Photo Pool(s) Memory **13** is one of the buffer pools (a first buffer pool) that makes up the hardware and software components. In some embodiments, the Photo Pool(s) Memory **13** uses the mobile phone's random-access memory (RAM) component to store the captured raw images while in others it may use another memory resource that is made available by the mobile phone. In certain embodiments, the Photo Pool(s) Memory **13** can include a plurality of individual pools or sub-pools with each pool being able to store a raw image while it awaits to be pulled by the next stage. In some embodiments, there are 2, 3, 4, 5, 6 and up to a maximum number of pools that is supported by the memory resources that are available on the mobile phone **1.**

Raw Frame Writer **15** pulls raw images from the Photo Pool(s) Memory and transforms the inputs by adding the meta-data that is written with the Meta-Data Writer **14.** This meta-data can include for example an accurate measurement of the frame rate signal from the video data output engine measuring the time increment between captured raw images and adjust the timing accordingly. Raw Frame Writer **15** also takes as an input the audio output from a microphone, Audio Output Microphone **16.** In some embodiments, this microphone output can be any of the microphones on a mobile phone. In certain embodiments, the microphone output could be an external microphone that is interfaced with the mobile phone **1.**

Encode Pools Memory **17** is a second buffer pool, similar to some ways with the Photo Pool(s) Memory **13.** In some embodiments, the Encode Pools Memory **17** has a similar function as the Photo Pool(s) Memory, storing raw images temporarily in a short-term memory stage between a push or pull of the next step. In some embodiments, there could be 5 individual sub-pools in a given buffer pool, each one capable of holding a raw image until it is pulled to the next phase of the process. Each recorded image frame is briefly stored in the sub-pools of the pools **13**, **17** in an ordered and numbered sequence equal to its captured raw image frame number. By having one or more pools as needed to maintain peak performance, in some embodiments, allows a mobile phone to capture or record raw image files and save them to disk at an unprecedented speed of real-time.

The Encode Pools Memory **17** bridges to different possible encoders, including hardware or software encoders, to create versions of the same raw image data that can be encoded in different ways. In some embodiments, the Video Hardware Encoder Processor **18** can create videos using different codecs. In certain embodiments, the video created could be a lightweight, heavily compressed proxy video. In other embodiments, the Video Hardware Encoder Processor **18** can encode video in a high-quality post-production mastering codec. Video File Writer **19** will write the encoded video including audio and meta-data and save the data to a device's long-term memory.

Other encoders that the Encode Pools Memory **15** can push include Software Encoder **21** and Image Hardware Encoder Processor **22.** In some embodiments, Software Encoder 21 is a lossless JPEG encoder that allows a raw image to be encoded with no loss in data with the same image uncompressed. Other embodiments could include a different compression using a custom encoder that also runs in software. Although Software Encoder **21** offers the benefit of compressing losslessly, because it runs in software, it can be resource intensive for a mobile phone hardware architecture. Therefore, other embodiments may use Image Hardware Encoder Processor **22** to encode the raw images together with meta-data and audio. This approach offloads the compression to a stand-alone processor for superior performance. Depending on a mobile phone, if an Image Hardware Encoder Processor **22** is not part of hardware components, a Software Encoder **21** would need to be used to encode the raw images together with meta-data and audio.

In the present case, once the raw images are encoded using the Image Hardware Encoder Processor **22** or Software Encoder **21**, after compressing, the raw images together with meta-data and audio will be pushed to File Format Writer **23**, which prepares the files to save to Memory **24.** In some embodiments, the File Format Writer **23** will write raw images to open standard DNG format first, and then finalize writing to CinemaDNG, which is the cinematic version of DNG. In other embodiments, a different file format can be used.

After passing through the File Format Writer **23**, the raw image files with meta-data and audio file can either be saved to the Memory **24** or can be sent to External Device **25.** In this embodiment, there is one audio file recorded that corresponds to each raw image recording session. If data is sent to the External Device **25**, in some embodiments data will be sent over wired connection, for example USB-C, from the mobile phone **1** to the External Device **25.** This will allow the data to be networked to a hub, monitor, computing device or other external devices. The data can also be sent using a wireless protocol, for example, to cloud storage.

The mobile phone may additionally comprise a separate data processor for recording and/or processing various settings and/or parameters related to the recording. This processor may for instance set the recording frame rate for the camera engine optionally based on the user selection of this frame rate.

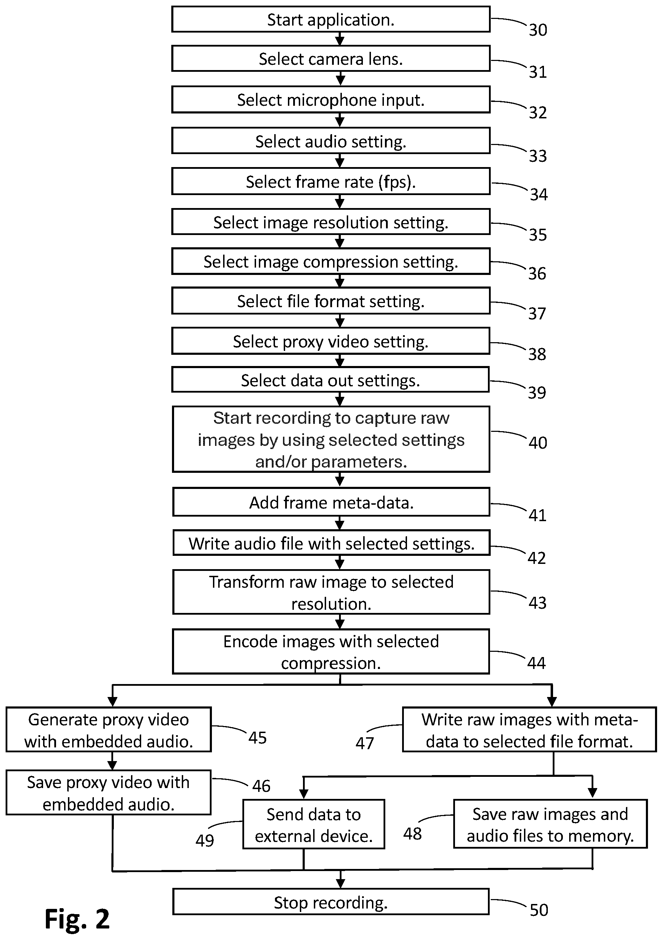

Figure 2 illustrates the process for some embodiments. When the application is started in step **30**, the app's default settings will load. In step **31**, the camera lens is selected for the module Camera Sensor & Camera Lens **10.** For example, in some embodiments the default Ultra-Wide lens is selected. In a similar manner, in step **32**, the microphone input is selected or set for the hardware component of Audio Output Microphone **16**. By default, the mobile phone 1 may already have a front microphone set or selected.

There are additional settings that can be set, overriding the application's default settings. These settings are numerous. In some embodiments, in step **33**, an audio setting is selected or set. This allows to set a compression level; sampling rate; as well as apply audio filters, for example, de-popping. In step **34**, frame rate (fps) is selected or set. This will set the Video Data Output Engine **11**. The image resolution selected or set in step **35** is transformed by the software encoder **21** or the image hardware encoder processor **22**, which will transform the native raw image resolution to the selected resolution in step **43.** In step **36**, image compression is selected or set. In step 3**7**, file format setting is selected or set. In step **38**, proxy video setting is selected or set. In step **39**, data out setting is selected or set.

In step 4**0**, recording is started to capture raw images by using selected settings and/or parameters allowing for the application to record in the first place. In step **41**, writing frame meta-data **41** is carried out to add data fields to the captured raw images that can be used to evaluate the process and also can measure the performance of the recording. Using the Audio Output Microphone **16**, in step **42**, an audio file with selected settings is written in parallel with its corresponding raw image sequence. In some embodiments, in step **43**, the original raw image which will be transformed from the original dimensions of the raw images, in this case from 4024 × 3024 pixels, to the selected resolution, which in this example is a lower resolution than the original resolution used to record the raw images. This could be done using either software or a hardware compressor. In other words, in this step, after having started recording the raw images, the method further comprises up-scaling or down-scaling native raw image recording resolution to a resolution selected prior to recording the raw image frames. The Image Hardware Encoder Processor **22** or Software Encoder **21** can be used to apply different compressions in step **44**, leaving the raw image effectively with the same characteristics but with a smaller file size. The present invention optionally includes a bridge that allows to generate a proxy video with embedded audio in step **45** eventually saving the proxy video including embedded audio to the Memory **20** in step **46.** On the other hand, in step **47**, raw images with meta-data are written to selected file format allowing the file(s) including the raw images and the associated meta-data to be sent to the external device in step **49** and to save this file/these files and audio files to memory in step **48.** In step **50**, the recording is stopped. It is to be noted that the order of the steps in the above method may be changed, and some steps are optional. For example, if the user of the mobile phone **1** does not select or set some settings or parameters, then defaults settings in this regard will be used.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. For example, it is possible to combine any of the above teachings to obtain further embodiments.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of recording raw cinema on a camera apparatus (1) comprising a camera engine comprising a video data output engine (11) and a photo capture engine (12), the method comprising the steps of:
setting (34) a recording frame rate for the camera engine;
the video data output engine (11) generating a frame rate signal based on the set recording frame rate; and
the photo capture engine (12) recording (40) raw image frames at cinematic frame intervals defined by the frame rate signal.

2. The method according to claim 1, wherein the cinematic frame intervals are constant time intervals.

3. The method according to claim 1 or 2, wherein the method further comprises feeding the raw image frames through different stages of the camera engine of the camera apparatus using a system of a plurality of pool buffers (13, 17), where each recorded image frame is briefly stored in an ordered and numbered sequence equal to its captured raw image frame number.

4. The method according to any one of the preceding claims, wherein the method further comprises transferring the raw image frames to a first buffer (13) to be transferred to a raw image writer (15) or to a second buffer (17).

5. The method according to claim 4, wherein the first buffer (3) comprises a set of first discrete sub-buffers each configured to hold one individual raw image frame at any given time such that when a first raw image frame is called from a respective sub-buffer, the respective sub-buffer is flushed and a second, new raw image frame can take the place of the first image frame in the respective sub-buffer.

6. The method according to any one of the preceding claims, wherein the method further comprises adding (41, 42) audio data, and/or meta-data, and/or frame metrics to the raw image frames to prepare them as part of larger image data sequence of raw cinema recording.

7. The method according to any one of the preceding claims, wherein the method further comprises generating a proxy video file comprising the raw image frames and embedded audio data thereby combining the audio data and the raw image frames into a lightweight video that can be played back on the camera apparatus (1).

8. The method according to claim 7, wherein the proxy video file further comprises embedded meta-data.

9. The method according to any one of the preceding claims, wherein the method further comprises transferring the raw image frames to a second buffer (17) to be transferred to a raw image writer (15) or to an encoder (18, 21, 22) that can encode any image frame size into different compression settings.

10. The method according to 9, wherein the second buffer (17) comprises a set of second discrete sub-buffers each configured to hold one individual raw image frame at any given time such that when a first raw image frame is called from a respective sub-buffer, the respective sub-buffer is flushed and a second, new raw image frame can take the place of the first image frame in the respective sub-buffer.

11. The method according to claim 10, wherein the method further comprises transforming (43) the original resolution of the raw image frames to another resolution, which is optionally a lower resolution than the original resolution used to record the raw image frames.

12. The method according to any one of the preceding claims, wherein prior to recording the raw image frames, the method further comprises performing an operation selected from the group of operations comprising: selecting a camera lens for the recording; selecting a microphone input for the recording; selecting an audio setting for the recording; selecting a frame rate for the recording; selecting an image resolution setting for the recording; selecting an image resolution setting for the recorded raw image frames; selecting an image compression setting for the recorded raw image frames; selecting a file format setting for the recorded raw image frames; and selecting a "save to" location for the recorded raw image frames.

13. The method according to any of the preceding claims, wherein after having started recording the raw image frames, the method further encoding (44) the raw image frames with selected compression.

14. A non-transitory computer program product comprising instructions for implementing the steps of the method according to any one of the preceding claims when loaded and run on a computing means of a camera apparatus (1).

15. A camera apparatus (1) for recording raw cinema, the camera apparatus comprising a camera engine comprising a video data output engine (11) and a photo capture engine (12), and further comprising a data processor for setting a recording frame rate for the camera engine, wherein the video data output engine (11) is configured to generate a frame rate signal based on the set recording frame rate; and the photo capture engine (12) is configured to record raw image frames at cinematic frame intervals defined by the frame rate signal.
